# EUROPEAN PATENT APPLICATION

(11) **EP 4 535 613 A1**
(43) Date of publication of application: **09.04.2025**
(21) Application number: 23815565.9
(22) Date of filing: 03.04.2023
(51) Int. Cl.: H02J 50/80, B60L 5/00, B60L 53/12, B60L 53/68, B60M 7/00, G16Y 10/40, G16Y 20/20, G16Y 20/30, H02J 7/00, H02J 50/10

(54) **CONTACTLESS POWER FEEDING DEVICE, CONTACTLESS POWER FEEDING SYSTEM CONTROL PROGRAM, VEHICLE, AND CONTACTLESS POWER FEEDING RECEPTION DEVICE**

(30) Priority: 30.05.2022 JP 2022087915
(71) Applicant: TOYOTA JIDOSHA KABUSHIKI KAISHA, Toyota-shi, Aichi-ken 471-8571 (JP); DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); KANESAKI, Masaki, Kariya-shi, Aichi 448-8661 (JP); YAMAGUCHI, Nobuhisa, Kariya-shi, Aichi 448-8661 (JP); TANI, Keisuke, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: TBK
(86) International application number: PCT/JP2023/013859
(87) International publication number: WO 2023/233803

(57) **Abstract**

A contactless power feeding system according to the present invention includes a power transmission characteristic acquisition unit that is provided on a side of a power supply segment and measures a power transmission characteristic of the power supply segment, a power reception characteristic acquisition unit that is provided on a side of a vehicle and measures a power reception characteristic of the vehicle, and an abnormality detection means that matches a measurement period of the power transmission characteristic of the power supply segment measured by the power transmission characteristic acquisition unit with a measurement period of the power reception characteristic of the vehicle measured by the power reception characteristic acquisition unit, calculates efficiency of the power supply segment using the power transmission characteristic of the power supply segment and the power reception characteristic of the vehicle, the measurement periods of which are matched, and determines abnormality of the power supply segment on the basis of the calculated efficiency.

## Description

### Field

The present invention relates to a contactless power feeding system that contactlessly supplies power to a traveling vehicle, a control program for the contactless power feeding system, a vehicle, and a contactless power feeding power receiving device.

### Background

Patent Literature 1 discloses a technology for detecting abnormality in a power supply segment that contactlessly supplies power to a traveling vehicle. Specifically, the technology disclosed in Patent Literature 1 determines whether there is abnormality in electrical characteristic of a target segment by sharing an electrical characteristic with a target segment to be subjected to abnormality determination, and at least one of a previous segment supplied with power before the target segment and a subsequent segment supplied with power after the target segment, and comparing the electrical characteristic of the target segment with at least one of the electrical characteristic of the previous segment and the electrical characteristic of the subsequent segment.

### Citation List

### Patent Literature

Patent Literature 1: Japanese Laid-open Patent Publication No. 2020-178471

### Summary

### Technical Problem

According to the technology disclosed in Patent Literature 1, it is not possible to individually detect abnormality of the power supply segment. In case where abnormality occurs in a plurality of consecutive power supply segments, abnormality of the power supply segment cannot be detected.

The present invention has been achieved in view of the above-described problem, and an object thereof is to provide a contactless power feeding system, a control program for the contactless power feeding system, a vehicle, and a contactless power feeding power receiving device capable of individually detecting abnormality of a power supply segment and detecting abnormality in power supply segment even in a case where abnormality occurs in a plurality of consecutive power supply segments.

### Solution to Problem

According to the present invention, a contactless power feeding system that contactlessly supplies power from a power supply segment provided on a traveling path of a vehicle to a traveling vehicle, includes: a power transmission characteristic acquisition unit that is provided on a side of the power supply segment and measures a power transmission characteristic of the power supply segment; a power reception characteristic acquisition unit that is provided on a side of the vehicle and measures a power reception characteristic of the vehicle; and an abnormality detection means that matches a measurement period of the power transmission characteristic of the power supply segment measured by the power transmission characteristic acquisition unit with a measurement period of the power reception characteristic of the vehicle measured by the power reception characteristic acquisition unit, calculates efficiency of the power supply segment using the power transmission characteristic of the power supply segment and the power reception characteristic of the vehicle, the measurement periods of which are matched, and determines abnormality of the power supply segment on a basis of the calculated efficiency.

According to the present invention, a control program of a contactless power feeding system that contactlessly supplies power from a power supply segment provided on a traveling path of a vehicle to a traveling vehicle, causes a computer to execute: a power transmission characteristic acquisition step of measuring a power transmission characteristic of the power supply segment; a power reception characteristic acquisition step of measuring a power reception characteristic of the vehicle; and an abnormality detection step of matching a measurement period of the power transmission characteristic of the power supply segment measured by the power transmission characteristic acquisition process with a measurement period of the power reception characteristic of the vehicle measured by the power reception characteristic acquisition process, calculating efficiency of the power supply segment using the power transmission characteristic of the power supply segment and the power reception characteristic of the vehicle, the measurement periods of which are matched, and determining abnormality of the power supply segment on a basis of the calculated efficiency.

According to the present invention, a vehicle capable of receiving power from a contactless power feeding system that contactlessly supplies power from a power supply segment provided on a traveling path of a vehicle to a traveling vehicle, includes: a power reception characteristic acquisition unit that measures a power reception characteristic of the vehicle; and a notification device that notifies an abnormality detection means of the contactless power feeding system of the measured power reception characteristic. Further, the vehicle that causes the abnormality detection means to match a measurement period of a power transmission characteristic of the power supply segment measured by a power transmission characteristic acquisition unit provided on a side of the power supply segment with a measurement period of the power reception characteristic of the vehicle measured by the power reception characteristic acquisition unit, calculate efficiency of the power supply segment using the power transmission characteristic of the power supply segment and the power reception characteristic of the vehicle, the measurement periods of which are matched, and determine abnormality of the power supply segment on a basis of the calculated efficiency.

According to the present invention, a contactless power feeding power receiving device mounted on a vehicle capable of receiving power from a contactless power feeding system that contactlessly supplies power from a power supply segment provided on a traveling path of a vehicle to a traveling vehicle, includes: a power reception characteristic acquisition unit that measures a power reception characteristic of the vehicle; and a notification device that notifies an abnormality detection means of the contactless power feeding system of the measured power reception characteristic. Further, the contactless power feeding power receiving device causes the abnormality detection means to match a measurement period of a power transmission characteristic of the power supply segment measured by a power transmission characteristic acquisition unit provided on a side of the power supply segment with a measurement period of the power reception characteristic of the vehicle measured by the power reception characteristic acquisition unit, calculate efficiency of the power supply segment using the power transmission characteristic of the power supply segment and the power reception characteristic of the vehicle, the measurement periods of which are matched, and determine abnormality of the power supply segment on a basis of the calculated efficiency. Advantageous Effects of Invention

A contactless power feeding system, a control program for the contactless power feeding system, a vehicle, and a contactless power feeding power receiving device according to the present invention determines abnormality of a power supply segment using power information acquired by matching acquisition timing on a vehicle side and a power supply segment side, so that it is possible to individually detect abnormality of the power supply segment and detect abnormality in power supply segment even in a case where abnormality occurs in a plurality of consecutive power supply segments.

### Brief Description of Drawings

FIG. 1 is a block diagram illustrating a configuration of a contactless power feeding system being one embodiment of the present invention.
FIG. 2 is a block diagram illustrating a configuration of a vehicle illustrated in FIG. 1.
FIG. 3 is a block diagram illustrating a configuration of a power supply segment illustrated in FIG. 1.
FIG. 4 is a diagram for explaining operations of an acquisition timing adjustment unit and an abnormality determination unit of a server device.
FIG. 5 is a diagram illustrating an example of a feedable power characteristic.
FIG. 6 is a diagram illustrating an example of a relationship between a time required for a vehicle to travel 2.6 mm and a vehicle speed.

### Description of Embodiments

A contactless power feeding system being one embodiment of the present invention is hereinafter described in detail with reference to the drawings.

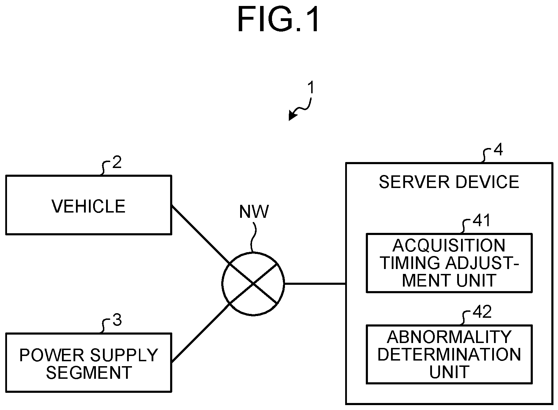

FIG. 1 is a block diagram illustrating a configuration of a contactless power feeding system being one embodiment of the present invention. As illustrated in FIG. 1, a contactless power feeding system 1 being one embodiment of the present invention is a system that contactlessly supplies power to a traveling vehicle, and includes a vehicle 2, a power supply segment 3, and a server device 4.

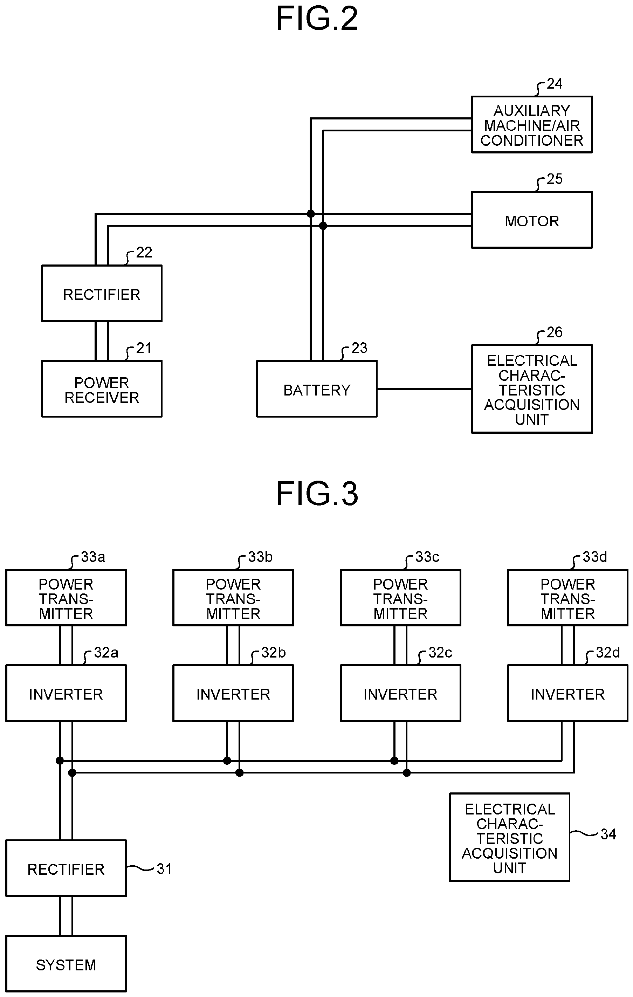

The vehicle 2 is formed of a known vehicle such as a hybrid vehicle (HV), an electric vehicle (EV), a plug-in hybrid vehicle (PHV), or a fuel cell electric vehicle (FCEV), and includes a communication module capable of performing information communication via an electrical communication line NW such as an Internet line network or a mobile phone line network. As illustrated in FIG. 2, the vehicle 2 includes a power receiver 21 that receives power supplied from the power supply segment 3 and a rectifier 22 that rectifies the power received by the power receiver 21. The rectifier 22 supplies the rectified power to each unit of the vehicle 2 such as a battery 23, an auxiliary machine/air conditioner 24, and a motor 25.

The vehicle 2 includes an electrical characteristic acquisition unit 26 that measures an input power (received power) waveform from the power supply segment 3 to the battery 23. The electrical characteristic acquisition unit 26 transmits information regarding the measured input power waveform to the battery 23 to the server device 4 via the electrical communication line NW together with information (measurement time information) regarding a time at which the input power waveform to the battery 23 is measured and information (vehicle ID) regarding unique identification information assigned to each vehicle 2. Examples of the measurement time information include time information of a measurement time clocked using a radio clock and a count value of a period in which the vehicle 2 travels on the power supply segment 3.

As illustrated in FIG. 3, the power supply segment 3 includes a rectifier 31 that rectifies a DC voltage from a system, a plurality of inverters 32a to 32d that converts the DC voltage rectified by the rectifier 31 into an AC voltage, and a plurality of power transmitters 33a to 33d that transmits the AC voltage output from the plurality of inverters 32a to 32d to the vehicle 2.

The power supply segment 3 includes an electrical characteristic acquisition unit 34 that measures an input power (transmitted power) waveform from the power transmitters 33a to 33d. The electrical characteristic acquisition unit 34 transmits information regarding the measured input power waveform of the power transmitters 33a to 33d to the server device 4 via the electrical communication line NW together with information (measurement time information) regarding a time at which the input power waveform of the power transmitters 33a to 33d is measured, information (segment ID) regarding unique identification information assigned to each power supply segment 3, and information regarding the vehicle ID of the vehicle 2 to which the power is supplied. Examples of the measurement time information include time information of a measurement time clocked using a radio clock and a count value of a period in which the vehicle 2 travels on the power supply segment 3. The information regarding the input power waveform to be transmitted is information plotted at one or more time at least (such as 2:30:1 and 2:30:1.1), and, for example, a time at which the input power waveform reaches peak power, a time at which the input power waveform becomes half the peak power and the like may be picked up and transmitted as a feature point of the input power waveform.

Returning to FIG. 1, the server device 4 includes an information processing device such as a workstation, and is connected to the vehicle 2 and the power supply segment 3 via the electrical communication line NW. The server device 4 performs information communication with the vehicle 2 and the power supply segment 3 via the electrical communication line NW. The server device 4 serves as an acquisition timing adjustment unit 41 and an abnormality determination unit 42 when an arithmetic processing device such as a CPU in the information processing device executes a computer program.

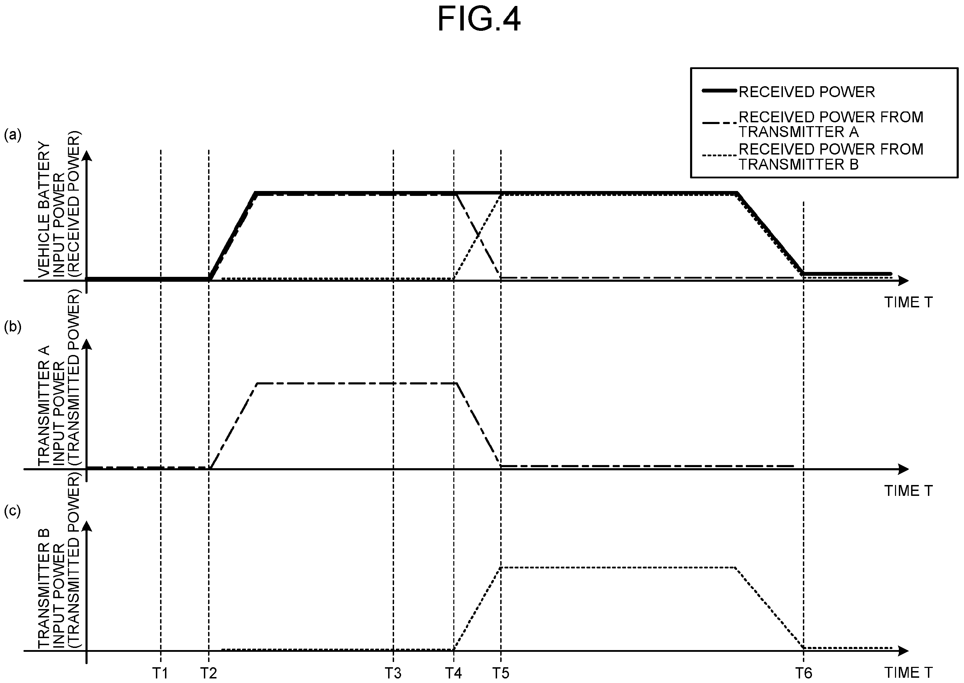

The acquisition timing adjustment unit 41 acquires information from the electrical characteristic acquisition unit 26 and the electrical characteristic acquisition unit 34 via the electrical communication line NW, and associates the input power waveform to the battery 23 with the input power waveform of the power transmitters 33a to 33d regarding the same vehicle 2 on the basis of the vehicle ID included in the acquired information. Then, as illustrated in FIG. 4(a) to (c), the acquisition timing adjustment unit 41 matches a measurement period of the input power waveform to the battery 23 with a measurement period of the input power waveform of the power transmitters 33a to 33d associated with each other on the basis of the measurement time information included in the acquired information. In the example illustrated in FIG. 4(a) to (c), a rise time of the input power waveform of a power transmitter A matches with a rise time of the input power waveform to the battery 23 at time T=T2, a rise time of the input power waveform of a power transmitter B matches with the rise time of the input power waveform to the battery 23 at time T=T4, an extinction time of the input power waveform of the power transmitter A matches with an extinction time of the input power waveform to the battery 23 at time T=T5, and an extinction time of the input power waveform of the power transmitter B matches with the extinction time of the input power waveform to the battery 23 at time T=T6.

The abnormality determination unit 42 determines abnormality of the power supply segment 3 using the input power waveform to the battery 23 and the input power waveform of the power transmitters 33a to 33d the measurement periods of which are matched by the acquisition timing adjustment unit 41, and notifies an administrator and the like of information regarding the segment ID of the power supply segment 3 determined to be abnormal. For example, in the example illustrated in FIG. 4(a) to (c), average charging efficiency of the power transmitter A is calculated by dividing a value obtained by subtracting a transmitted power amount of the power transmitter B at time T=T4 to T5 from a received power amount of the battery 23 at time T=T2 to T5 by a transmitted power amount of the power transmitter A at time T=T2 to T5. Then, in a case where the calculated average charging efficiency does not fall within a predetermined range, the abnormality determination unit 42 determines that there is abnormality in the power transmitter A and notifies the administrator and the like of the segment ID of the power transmitter A. Similarly, the abnormality determination unit 42 determines abnormality of the power transmitter B. The abnormality determination unit 42 may determine abnormality using charging efficiency at any timing instead of the average charging efficiency. However, in this case, as any timing, timings at which the plurality of power transmitters is driven (for example, times T=T4 to T5 illustrated in FIG. 4(a) to (c)) is excluded. Time T=T1 and T3 illustrated in FIG. 4(a) to (c) indicate timings at which power feeding of the power transmitter A and the power transmitter B is permitted, respectively.

As is clear from the description above, in the contactless power feeding system 1 being one embodiment of the present invention, the server device 4 matches the measurement period of the input power waveform to the battery 23 with the measurement period of the input power waveform of the power transmitters 33a to 33d, and then determines whether abnormality occurs in the power supply segment 3 on the basis of the efficiency of the power supply segment 3 obtained from the input power waveform to the battery 23 and the input power waveform of the power transmitters 33a to 33d. As a result, abnormality of the power supply segment 3 can be detected individually, and abnormality of the power supply segment 3 can be detected even in a case where abnormality occurs in a plurality of consecutive power supply segments 3.

### [Definition of Matching]

In in-travel power feeding, a positional relationship between the power receiver and the power transmitter changes from moment to moment depending on the travel of the vehicle. This change in positional relationship can also be said to be a change in upper limit value of feed power (ease of feeding power); for example, in a case where feeding is continued at an upper limit value of the feed power without controlling the feed power, if the measurement period of the power waveform deviates, a large difference occurs in power for comparing the efficiency between the vehicle side and the power supply segment side. In a measuring method, an upper limit of measurement accuracy (measurement error) is set to 5% until 50 kW and 3% until 500 kW. A catalog value of the measurement accuracy is 2.5%. Under such circumstances, it can be understood that high measurement accuracy such as 3% is required for required measurement accuracy when performing power measurement. When the upper limit of the measurement accuracy is set to 3% and the measurement accuracy of the sensor is 2.5%, there is only a margin of 0.5% in measurement accuracy, and an error (condition change) exceeding 0.5% is not allowed. Therefore, as the definition of "matching" described above, the condition change that falls within a change of less than 0.5% is required.

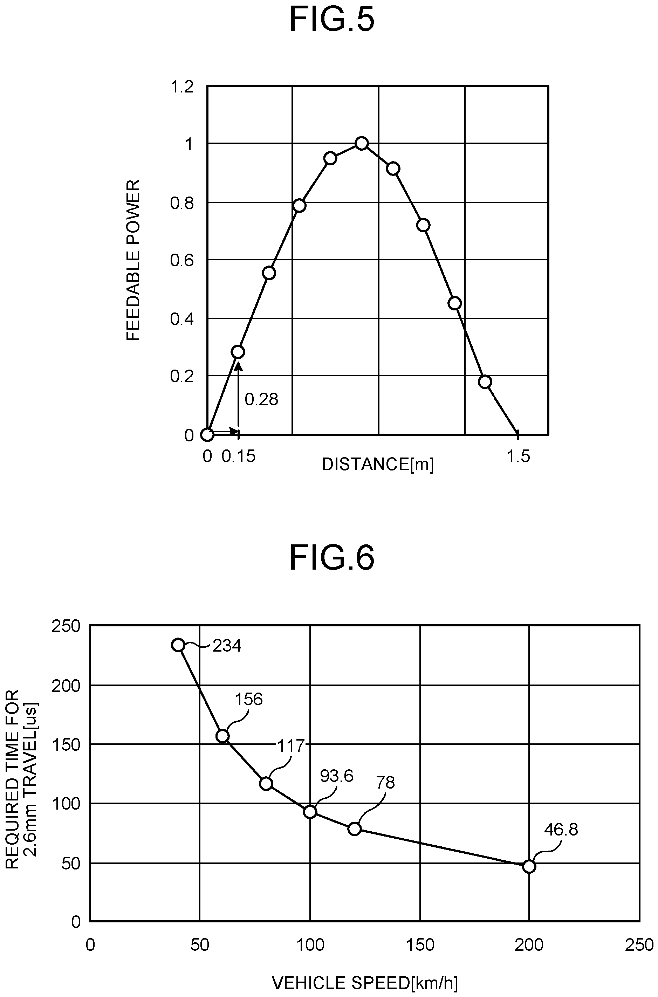

For example, in a case where a length of the power receiver is 1.5 m, a feedable power characteristic is as illustrated in FIG. 5. The feedable power characteristic illustrated in FIG. 5 is obtained by normalizing the feedable power characteristic by a position of the power receiver with respect to the power transmitter. As illustrated in FIG. 5, it can be understood that a value of the power varies by 28% as a positional relationship between the power receiver and the power transmitter changes by 15 cm. Therefore, from the viewpoint of a variation range of 0.5%, since it varies by 0.5% with a deviation of 2.6 mm, accuracy of the power acquisition timing of 2.6 mm or less is required as the distance. A time corresponding to a vehicle speed is organized for 2.6 mm as illustrated in FIG. 6, and it can be said that the vehicle speed can be covered in general when a time corresponding to matching is set to 50 µs or less. Note that, in this example, the length of the power receiver is 1.5 m, but if the length is 0.75 m, which is a half, the time corresponding to matching is 25 µs or less, which is a half, and a specific value of matching changes depending on a size of the power receiver or the power feeder and a traveling speed of the vehicle.

### [Calibration of Electrical Characteristic Acquisition Unit]

It is possible to arrange a device for measuring a lateral deviation position and a ground level of the vehicle around the power transmitter for measurement, measure a power amount when the vehicle passes through the power transmitter for measurement, and in a case where there is a difference between the measured power amount and a power amount calculated from efficiency of a combination of a measured value of the device and the power amount, a conversion gain of the electrical characteristic acquisition unit on the vehicle side may be adjusted so as to reduce the difference. It is possible to arrange a device for measuring a lateral deviation position and a ground level in a vehicle, measure a power amount when the vehicle passes through the power transmitter for measurement, and in a case where there is a difference between the measured power amount and a power amount calculated from a combination of a measured value of the device, a conversion gain of the electrical characteristic acquisition unit on the power segment side may be adjusted so as to reduce the difference.

Although the embodiment to which the invention achieved by the present inventors is applied is described above, the present invention is not limited by the description and the drawings being a part of the disclosure of the present invention by this embodiment. That is, all other embodiments and examples and operation technologies carried out by one skilled in the art on the basis of this embodiment are included in the scope of the present invention.

### Industrial Applicability

According to the present invention, it is possible to provide a contactless power feeding system, a control program for the contactless power feeding system, a vehicle, and a contactless power feeding power receiving device capable of individually detecting abnormality of a power supply segment and detecting abnormality in power supply segment even in a case where abnormality occurs in a plurality of consecutive power supply segments.

### Reference Signs List

- 1: CONTACTLESS POWER FEEDING SYSTEM

- 2: VEHICLE
- 3: POWER SUPPLY SEGMENT
- 4: SERVER DEVICE
- 21: POWER RECEIVER
- 22: RECTIFIER
- 23: BATTERY
- 24: AUXILIARY MACHINE/AIR CONDITIONER
- 25: MOTOR
- 26: ELECTRICAL CHARACTERISTIC ACQUISITION UNIT
- 31: RECTIFIER
- 32a to 32d: INVERTER
- 33a to 33d: POWER TRANSMITTER
- 41: ACQUISITION TIMING ADJUSTMENT UNIT
- 42: ABNORMALITY DETERMINATION UNIT
- NW: ELECTRICAL COMMUNICATION LINE

## Claims

1. A contactless power feeding system that contactlessly supplies power from a power supply segment provided on a traveling path of a vehicle to a traveling vehicle,
the contactless power feeding system comprising:
a power transmission characteristic acquisition unit that is provided on a side of the power supply segment and measures a power transmission characteristic of the power supply segment;
a power reception characteristic acquisition unit that is provided on a side of the vehicle and measures a power reception characteristic of the vehicle; and
an abnormality detection means that matches a measurement period of the power transmission characteristic of the power supply segment measured by the power transmission characteristic acquisition unit with a measurement period of the power reception characteristic of the vehicle measured by the power reception characteristic acquisition unit, calculates efficiency of the power supply segment using the power transmission characteristic of the power supply segment and the power reception characteristic of the vehicle, the measurement periods of which are matched, and determines abnormality of the power supply segment on a basis of the calculated efficiency.

2. A control program of a contactless power feeding system that contactlessly supplies power from a power supply segment provided on a traveling path of a vehicle to a traveling vehicle,
the control program of a contactless power feeding system causing a computer to execute:
a power transmission characteristic acquisition step of measuring a power transmission characteristic of the power supply segment;
a power reception characteristic acquisition step of measuring a power reception characteristic of the vehicle; and
an abnormality detection step of matching a measurement period of the power transmission characteristic of the power supply segment measured by the power transmission characteristic acquisition process with a measurement period of the power reception characteristic of the vehicle measured by the power reception characteristic acquisition process, calculating efficiency of the power supply segment using the power transmission characteristic of the power supply segment and the power reception characteristic of the vehicle, the measurement periods of which are matched, and determining abnormality of the power supply segment on a basis of the calculated efficiency.

3. A vehicle capable of receiving power from a contactless power feeding system that contactlessly supplies power from a power supply segment provided on a traveling path of a vehicle to a traveling vehicle,
the vehicle comprising:
a power reception characteristic acquisition unit that measures a power reception characteristic of the vehicle; and
a notification device that notifies an abnormality detection means of the contactless power feeding system of the measured power reception characteristic, the vehicle that causes
the abnormality detection means to match a measurement period of a power transmission characteristic of the power supply segment measured by a power transmission characteristic acquisition unit provided on a side of the power supply segment with a measurement period of the power reception characteristic of the vehicle measured by the power reception characteristic acquisition unit, calculate efficiency of the power supply segment using the power transmission characteristic of the power supply segment and the power reception characteristic of the vehicle, the measurement periods of which are matched, and determine abnormality of the power supply segment on a basis of the calculated efficiency.

4. A contactless power feeding power receiving device mounted on a vehicle capable of receiving power from a contactless power feeding system that contactlessly supplies power from a power supply segment provided on a traveling path of a vehicle to a traveling vehicle,
the contactless power feeding power receiving device comprising:
a power reception characteristic acquisition unit that measures a power reception characteristic of the vehicle; and
a notification device that notifies an abnormality detection means of the contactless power feeding system of the measured power reception characteristic, the contactless power feeding power receiving device that causes
the abnormality detection means to match a measurement period of a power transmission characteristic of the power supply segment measured by a power transmission characteristic acquisition unit provided on a side of the power supply segment with a measurement period of the power reception characteristic of the vehicle measured by the power reception characteristic acquisition unit, calculate efficiency of the power supply segment using the power transmission characteristic of the power supply segment and the power reception characteristic of the vehicle, the measurement periods of which are matched, and determine abnormality of the power supply segment on a basis of the calculated efficiency.
